Europäisches Patentamt

European Patent Office

Office européen des brevets

(11) Publication number: **0 209 244**
**B1**

(12) **EUROPEAN PATENT SPECIFICATION**

(45) Date of publication of patent specification: **07.12.88**

(51) Int. Cl.⁴: **F 02 M 61/08**

(21) Application number: **86304516.7**

(22) Date of filing: **12.06.86**

(54) **Fuel injection nozzle.**

(30) Priority: **15.07.85 US 754769**

(43) Date of publication of application:
**21.01.87 Bulletin 87/04**

(45) Publication of the grant of the patent:
**07.12.88 Bulletin 88/49**

(84) Designated Contracting States:
**DE GB**

(56) References cited:
**DE-A-2 542 727**
**DE-C- 802 968**
**FR-A- 827 877**
**FR-A-2 289 756**
**US-A-2 035 203**
**US-A-2 295 081**

(73) Proprietor: **GENERAL MOTORS CORPORATION**
**General Motors Building 3044 West Grand**
**Boulevard**
**Detroit Michigan 48202 (US)**

(72) Inventor: **Sczomak, David Peter**
**3630 Wakefield**
**Troy Michigan 48083 (US)**

(74) Representative: **Denton, Michael John et al**
**Patent Section - Luton Office (F6) Vauxhall**
**Motors Limited P.O. Box 3 Kimpton Road**
**Luton Bedfordshire LU2 0SY (GB)**

Courier Press, Leamington Spa, England.

## Description

This invention relates to fuel injection nozzles for internal combustion engines and, in particular, to such a fuel injection nozzle having an outwardly opening poppet valve, for use in a direct injection type diesel engine.

Fuel injection nozzles having an outwardly opening poppet valve for use in diesel engines are well known. In this type of fuel injection nozzle, there is provided a poppet valve that is movable to an open position relative to an associated valve seat by a high pressure pump, and that is movable to its closed position in seating engagement with the valve seat by a valve return spring acting on the poppet valve.

Exemplary embodiments of such fuel injection nozzles that have spray discharge orifices associated with the poppet valve that are uncovered upon opening movement of the poppet valve are disclosed, for example, in US patents 2,035,203, 2,521,224, 4,082,224, and 4,153,200, and FR—A—2289756. DE—A—2542727 discloses an injection nozzle including a nozzle head with a cone-shaped surface engageable with a valve seat.

However, because of current and future emission standards, all such prior known fuel injection nozzles appear to be unsuitable for use in direct injection type diesel engines because of poor injected fuel penetration at light engine loads, which can also result in high smoke levels.

It is therefore, a primary object of the present invention to provide an improved fuel injection nozzle for use in direct injection type diesel engines that is operable in a manner whereby to substantially eliminate carbon build-up on the cooperating elements of the spray tip without affecting the spray pattern of the fuel being discharged therefrom by the use of a poppet valve and an arrangement of fuel discharge passages whereby the fuel discharge passages are covered upon closure of the poppet valve.

Accordingly, another object of the invention is to provide an improved fuel injection nozzle having an outward opening poppet valve wherein the stem of the poppet valve has an internal fuel passage therein to supply fuel to fuel discharge passages which are circumferentially spaced apart, radially extending, and located and inclined so as to discharge fuel parallel to and directly across the (frusto-conical) valve seat surface of the head of the poppet valve which in turn is adapted to seat against the outer edge of a (frusto-conical) valve seat encircling the discharge end of the spray tip of the fuel injection nozzle.

A further object of the invention is to provide an improved fuel injection nozzle so constructed whereby it will remain substantially free of carbon build-up during extended operation thereof in a direct injection type diesel engine.

To this end, a fuel injection nozzle in accordance with the present invention is characterised over the prior art shown in US—A—2035203 by the features specified in the characterising portion of Claim 1.

The invention is now described, by way of example, with reference to the accompanying drawings, in which:—

Figure 1 is an enlarged longitudinal, cross-sectional view of a preferred embodiment of a fuel injection nozzle constructed in accordance with the invention;

Figure 2 is an enlarged end view of the poppet valve of the fuel injection nozzle of Figure 1, taken along line 2—2 of Figure 1;

Figure 3 is a further enlarged cross-sectional view of a portion of the poppet valve taken along line 3—3 of Figure 2; and,

Figures 4 and 5 are enlarged, exaggerated sectional views of a portion of the seating ends of spray tip and poppet valve of Figure 1, showing desired maximum valve-to-seat overlap and seat-to-valve overlap, respectively.

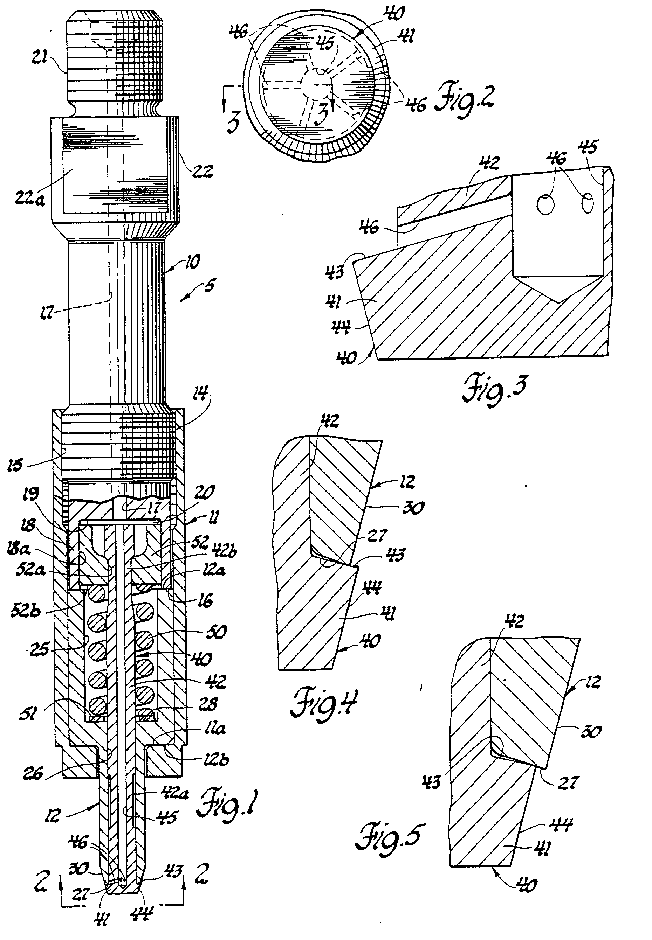

Referring to Figure 1, there is illustrated a fuel injection nozzle 5 of a type that is adapted to be mounted, for example, in a suitable nozzle receiving socket formed for this purpose in the cylinder head (not shown) of a (direct injection type) diesel engine with the end of the spray tip thereof suitably located so as to discharge fuel into an associated combustion chamber of the diesel engine, the fuel injection nozzle 5 being adapted to be axially retained by a suitable yoke type clamp or other suitable securing arrangement, not shown, in a manner well known in the art.

The fuel injection nozzle 5, in the construction illustrated is provided with a housing that includes an inlet fitting 10 which is tube-like, a tubular nut 11 and a spray tip 12 suitably secured together in a conventional manner. The inlet fitting 10 is secured to the tubular nut 11 by threaded engagement of external threads 14 thereof with internal threads 15 at the upper end of the tubular nut 11, with reference to Figure 1, whereby an upper end surface 12a of the spray tip 12 abuts against a lower face 16 of the inlet fitting 10 and a lower shoulder 12b of the spray tip abuts against an internal shoulder 11a of the tubular nut 11.

As shown, the inlet fitting 10 is provided with an axial stepped bore therethrough defined by a circular stepped upper wall 17 forming an inlet passage that extends downward from the upper or free end of the inlet fitting so as to open at its other end into a fuel chamber 20 (which is cylindrical) defined in part by a circular internal wall 18a of a lower reduced diameter tubular portion 18 of the inlet fitting. Circular internal wall 18a and circular stepped upper wall 17 are interconnected by a flat shoulder 19.

In addition, the inlet fitting 10 at its upper end is provided with suitable external threads 21 whereby a fuel supply tube and associate tube coupling, both not shown, can be secured thereto so that the fuel injection nozzle 5 can be intermittently supplied with fuel, for example, as by a high pressure distribution pump, not shown, in a conventional manner. Next adjacent to the external threads 21 there is provided an enlarged external diameter portion 22 having at least one set of opposed flats 22a therein sized to effect attachment of the fuel injection nozzle 5 to a cylinder head as by a clamp yoke, not shown, in a manner well known in the diesel fuel injection art.

Spray tip 12, of stepped external cylindrical configuration, is provided with an axial stepped bore therethrough defined by an internal upper wall 25 of a predetermined internal diameter less than that of the circular internal wall 18a of the inlet fitting 10, and by an internal lower wall 26 of reduced predetermined internal diameter, which at its discharge free end is encircled by a valve seat 27 which is frusto-conical and of a predetermined included angle. Internal upper and lower walls 25 and 26 are interconnected by a flat shoulder 28. As best seen in Figures 1, 4 and 5, the lower outer peripheral end of the spray tip 12 is relieved as by a chamfer 30 so as to intersect the valve seat 27 and to define therewith, at its outer peripheral edge, a so-called knife edge whereby the valve seat 27 is of a predetermined maximum external diameter for a purpose to be described in detail hereinafter. The chamfer 30 is formed at an angle of about 15° to 20° relative to the longitudinal axis of the spray tip 12.

Fuel discharge from the lower end of the spray tip 12 is controlled by means of an injection valve in the form of a poppet valve 40, that includes a head 41 with a valve stem 42 extending therefrom, the lower portion of the valve stem being of a predetermined external diameter whereby it is reciprocably and sealingly guided by the internal lower wall 26 and which is of an axial extent so as to extend loosely into the fuel chamber 20 but axially spaced apart from the flat shoulder 19. Preferably, as shown in Figure 1, an intermediate portion of the valve stem 42 slidably received by the internal lower wall 26 is provided with an annular groove 42a of predetermined axial extent whereby to reduce the contact area between the valve stem 42 and the internal lower wall.

The head 41 of the poppet valve 40 has an outer flat end, is preferably of a predetermined maximum external diameter corresponding to the external diameter of the valve seat 27 and is provided with a valve seat surface 43 which is annular and frusto-conical formed complementary to valve seat 27 but with a predetermined included angle such that preferably the valve seat 27 and valve seat surface 43 effect seating engagement at least at one of their, and preferably at both of their, outer peripheral edges. As shown, the head 41 below the valve seat surface 43 is also provided with a chamfer 44 formed complementary to the chamfer 30 at the lower end of the spray tip 12.

However, because of the usual manufacturing tolerance encountered in mass production of fuel injection nozzles, some overlap of the valve seat surface 43 of the poppet valve 40 relative to the valve seat 27 can be tolerated. Accordingly, in a particular application, the poppet valve 40 is selectively mated to a spray tip 12, such that the valve seat surface 43 of its head 41 can overhang the valve seat 27 of the spray tip 12 by a maximum of 0.01 mm as shown in Figure 4 or the valve seat 27 of the spray tip 12 can overhang the valve seat surface 43 of the head 41 by a maximum of 0.01 mm as shown in Figure 5. However, in another preferred injection nozzle application, the poppet valve 40 and spray tip 12 are ground on their outside peripheral surfaces, as necessary, to ensure zero overhang of the poppet valve 40 and spray tip 12 as shown in Figure 1. Again with references to Figures 4 and 5, the angles of and therefore the clearance between the valve seat 27 of the spray tip 12 and the valve seat surface 43 of the poppet valve 40 have been exaggerated so as to more clearly show edge contact of the valve seat and relative overhang of the respective elements.

The reason for limiting such overhang is due to the fact that any exposed surface which is radially outward of the actual sealed interface of the valve seat 27 and valve seat surface 43 can and will be wetted by fuel during the injection cycle and fuel thus collected on such exposed wetted surfaces can result in high hydrocarbon emissions during the combustion process then occurring in the associated combustion chamber, not shown. Thus it is desirable to reduce such surface area which can be wetted by fuel to a minimum. In addition, with the chamfers 30 and 44 of the spray tip 12 and head 41 arranged as shown, it appears that any carbon deposit which may engage any exposed valve seating surface either will fall off and/or burn off more readily due to the preferred range of the chamfer angle described hereinabove.

Preferably the differential angle between the included angles of the valve seat 27 and that of the valve seat surface 43, should be about or preferably less than 2°, whereby sealing will always occur at least at the outer peripheral edge of the valve seat 27 or at the outer peripheral edge of the valve seat surface 43 and, preferably at both their outer peripheral edges. Thus, by way of an example, in a particular application, the included angle of the valve seat 27 was 149°+0.15′ while that of the valve seat surface 43 was 151°. With this arrangement, the volume of fuel trapped outside of fuel discharge passages 46, described next hereinafter, yet inside of the engagement surfaces (that is, in the clearance (Figures 4 and 5) between the valve seat surface 43 and the valve seat 27, when they are sealed together) will be held to a minimum.

Extending axially through the valve stem 42 of the poppet valve 40 is an internal fuel passage 45 that is open at the upper free end of the valve stem for flow communication with the fuel in the fuel chamber 20 and which at its lower end is in flow communication with a plurality of fuel discharge passages 46 of predetermined diameters which are small relative to their length, and which are circumferentially equally spaced apart, radially outward extending, and downwardly directed; five such fuel discharge passages 46 being used in the embodiment shown as best seen in Figure 2.

As best seen in Figure 3, the longitudinal axis of each such fuel discharge passage 46 is inclined at an angle parallel to the valve seat surface 43 on the head 41 of the poppet valve 40, and the length of the fuel discharge passages is greater than the length of the valve seat surface. Additionally, each such fuel discharge passage 46 is axially located so that the wall of each fuel discharge passage runs substantially smoothly into the valve seat surface 43 at the lower outlet end of each fuel discharge passage 46, as shown by the straight line in Figure 2. This arrangement provides for maximum fuel spray penetration upon opening movement of the poppet valve 40 during a fuel injection cycle, because fuel is discharged parallel to and directly across the valve seat surface 43.

The poppet valve 40 is normally biased to a valve closed position relative to the valve seat 27, the position shown in Figures 1, 4 and 5, by means of a valve return spring 50 loosely encircling a portion of the valve stem 42 with the spring cavity defined in part by the internal upper wall 25 of the spray tip 12. As shown, one end of the valve return spring 50, which is of predetermined force, abuts against a washer shim 51 of predetermined thickness, as desired, while the opposite end abuts against the lower end of a spring keeper 52 suitably fixed to the upper free end portion of the valve stem 42. The spring keeper 52 is of conventional construction and is formed so as to be of cylindrical configuration with an outside diameter suitably less than the internal diameter of the circular internal wall 18a in the lower reduced diameter tubular portion 18 of the inlet fitting 10, and is provided with a key-hole aperture 52a whereby the valve stem 42 can be inserted axially therein and then moved radially so that a reduced diameter portion 42b of the valve stem 42 can be engaged in a reduced diameter portion of the key-hole aperture 52a.

With this arrangement, the spring keeper 52 is fixed to the valve stem 42 against axial movement in one direction, upward with reference to Figure 1. Also with this spring keeper 52 arrangement, since the lower surface 52b thereof is positioned so as to abut against the upper end surface 12a of the spray tip 12 whereby to limit opening movement of the poppet valve 40, this spring keeper 52 can be easily removed from the valve stem 42 for grinding of the lower surface 52b, if necessary, to obtain the predetermined desired lift for the poppet valve 40. Of course, with the construction shown, the upper free ends of both the valve stem 42 and of the spring keeper 52 are axially spaced, as desired from the flat shoulder 19 of the inlet fitting 10, when the poppet valve 40 is in the closed position shown.

A fuel injection nozzle in accordance with the present invention will result in lower hydrocarbon engine emissions because the poppet valve 40 is operative to close off the fuel in the fuel discharge passages 46 and thus there is no exposed fuel when the poppet valve is closed and, of course with the configuration of the head 41 of the poppet valve 40 and of the end of the spray tip 12 as shown, there is little, if any, exposed surfaces which can be wetted by fuel. In addition lower combustion noises will result because the head 41, valve seat surface 43 and valve seat 27 serve to throttle the fuel flow at the beginning of each injection cycle. Furthermore, the fuel injection nozzle can operate at lower peak fuel pressure levels than other known fuel injection nozzles because fuel can flow from the present fuel injection nozzle in a more efficient manner because of the location of the fuel discharge passages 46 relative to the valve seat surface 43 of the poppet valve 40, and since fuel discharge passages 46 of a larger size can be used without suffering a hydrocarbon penalty.

## Claims

1. A fuel injection nozzle (5) for use in a direct injection type diesel engine, the fuel injection nozzle including a housing (10, 11, 12) having an inlet passage (17) for pressurized fuel; a spray tip (12) having a discharge free end, an axial stepped bore (25, 26) therethrough, and a valve seat (27) which is frusto-conical, which encircles the axial stepped bore at the discharge free end of the spray tip, and which has an outer peripheral edge; an outwardly opening poppet valve (40) operatively positioned in the housing and including a head (41) with a valve seat surface (43) which is frusto-conical, which has an outer peripheral edge, and which is positioned for movement between an open position and a closed position relative to the valve seat, and a valve stem (42) extending from the head that is slidably received in the axial stepped bore, the poppet valve having an internal fuel passage (45) in fluid communication at one end with the inlet passage and terminating at its other end in fuel discharge passages (46) which are circumferentially spaced apart, radially extending, and inclined; a valve return spring (50) operatively associated with the poppet valve to normally bias the head of the poppet valve to the closed position; the fuel discharge passages (46) have a diameter which is small relative to their length, the wall of each fuel discharge passage (46) runs smoothly in a straight line into the valve seat surface (43), and the length of the fuel discharge passages (46) is greater than the length of the valve seat surface (43); the discharge free end of the spray tip (12) has a chamfer (30) which intersects the valve seat (27) to define therewith the outer peripheral edge thereof; and the head (41) has a chamfer (44) formed complementary to the chamfer (30) of the spray tip (12); characterised in that the valve seat (27), the valve seat surface (43) and the discharge free end of the spray tip (12) are configured so that the valve seat surface will effect sealing engagement with the valve seat at substantially the outer peripheral edge of the valve seat and/or the valve seat surface, with a maximum overhang of 0.01 mm of the valve seat or the valve seat surface with respect to each other; in that the chamfer (30) of the spray tip (12) is formed at an angle of about 15° to 20° relative to the longitudinal axis of the spray tip; and in that the head has an outer flat end approximately perpendicular to the longitudinally axis where the chamfer (44) ends.

2. A fuel injection nozzle as claimed in Claim 1, characterised in that the spray tip (12) is of stepped external diameter with the discharge free end having a reduced diameter; and in that the valve seat surface (43) has a differential angle of about 2° relative to the valve seat (27).

**Patentansprüche**

1. Brennstoffeinspritzdüse (5) zur Verwendung bei einer Direkt - Einspritz - Dieselmaschine, mit einem Gehäuse (10, 11, 12) mit einem Einlaß (17) für unter Druck stehenden Brennstoff; einer Sprühspitze (12) mit einem freien Auslaßende, einer axial gestuften Durchgangsbohrung (25, 26) und einem kegelstumpfförmigen Ventilsitz (27), der die axial gestufte Bohrung an dem freien Auslaßende der Sprühspitze umgibt und eine Außenumfangskante besitzt; einem nach außen öffnenen Tellerventil (40), das wirksam in das Gehäuse eingesetzt ist und einen Kopf (41) enthält mit einer kegelstumpfförmigen Sitzfläche (43) und einer Außenumfangskante, der zur Bewegung zwischen einer offenen Stellung und einer geschlossenen Stellung, bezogen auf den Ventilsitz, angeordnet ist, und mit einem von dem Kopf abstehenden Ventilschaft (42), der in der axial gestuften Bohrung gleitend aufgenommen ist, wobei das Tellerventil einen inneren Brennstoffdurchlaß (45) besitzt, der an einem Ende mit dem Einlaß in Fluidverbindung steht und an seinem anderen Ende in Brennstoffauslässe (46) ausläuft, die in Umfangsrichtung Abstand aufweisen, sich radial erstrecken und geneigt sind; einer wirksam dem Tellerventil zugeordneten Ventilrückholfeder (50), um normalerweise den Kopf des Tellerventils in die geschlossene Stellung vorzuspannen, wobei die Brennstoffauslässe (46) einen Durchmesser besitzten, der in Bezug auf ihre Länge klein ist, die Wand jedes Brennstoffauslasses (46) glatt in direkter Linie in die Ventilsitzfläche (43) übergeht, und die Länge der Brennstoffauslässe (46) größer als die Länge der Ventilsitzfläche (43) ist, das freie Auslaßende der Sprühspitze (12) eine Fase (30) besitzt, die den Ventilsitz (27) überschneidet, um damit dessen Außenumfangskante zu bestimmen, und der Kopf (41) eine komplementär zur der Fase (30) der Sprühspitze (12) ausgebildete Fase (44) besitzt, dadurch gekennzeichnet, daß der Ventilsitz (27), die Ventilsitzfläche (43) und das freie Auslaßende der Sprühspitze (12) so gestaltet sind, daß die Ventilsitzfläche dichtende Anlage mit dem Ventilsitz im wesentlichen an der Außenumfangskante des Ventilsitzes und/oder der Ventilsitzfläche bewirkt, mit einem maximalen gegenseitigen Überstand des Ventilsitzes bzw. der Ventilsitzfläche von 0,01 mm, daß die Fase (30) der Sprühspitze (12) mit einem Winkel von circa 15° bis 20°, bezogen auf die Längsachse der Sprühspitze, gebildet ist; und daß der Kopf dort, wo die Fase (44) endet, ein äußeres flaches und zur Längsachse annähernd senkrechtes Ende besitzt.

2. Brennstoffeinspritzdüse nach Anspruch 1, dadurch gekennzeichnet, daß die Sprühspitze (12) einen gestuften Außendurchmesser aufweist, wobei das freie Auslaßende einen verringerten Durchmesser besitzt; und daß die Ventilsitzfläche (43) bezogen auf den Ventilsitz (27) einen Differenzwinkel von ca. 2° aufweist.

**Revendications**

1. Injecteur de carburant (5) destiné à être utilisé dans un moteur diesel du type à injection directe, comprenant un corps (10, 11, 12) pourvu d'un passage d'amenée (17) de carburant sous pression, un glicleur (12) ayant une extrémité libre de décharge, un alésage axial étagé (25, 26) s'étendant à travers celui-ci, et un siège de soupape (27) en forme de cône tronqué qui entoure l'alésage axial étagé à l'extrémité libre de décharge du gicleur et qui est pourvu d'un bord périphérique externe, une soupape à champignon (40) s'ouvrant vers l'extérieur et disposée de manière opérationnelle dans le corps et comportant une tête (41) pourvue d'une surface butée (43) contre le siège de soupape ayant une forme en cône tronqué et un bord périphérique externe et qui est disposée de façon à pouvoir être déplacée entre une position d'ouverture et une position de fermeture par rapport au siège de soupape, et une tige de soupape (42) s'étendant à partir de la tête et qui est montée coulissante dans l'alésage axial étagé, la soupape à champignon étant pourvue d'un passage interne de carburant (45) qui est en communication fluidique à l'une de ses extrémités avec le passage d'amenée et se terminant à son autre extrémité par des passages de décharge (46) de carburant circonférentiellement espacés et s'étendant radialement de manière inclinée, un ressort de rappel (50) de la soupape associée de façon opérationnelle à la soupape à champignon de manière à solliciter normalement la tête de celle-ci vers la position de fermeture, les passages (46) de décharge de carburant ayant un faible diamètre par rapport à leur longueur, les parois de chaque passage (46) de décharge de carburant rejoignant en ligne droite la surface de butée (43) contre le siège de soupape, la longueur des passages (46) de décharge de carburant étant supérieure à la longueur de la surface de butée (43) contre le siège de soupape, l'extrémité libre de décharge du gicleur (12) étant pourvue d'un chanfrein (30) qui vient couper le siège de soupape (27) de façon à définir avec le siège de soupape le bord périphérique externe de celui-ci, la tête (41) étant pourvue d'un chanfrein (44) formé de façon complémentaire au chanfrein (30) du gicleur (12), caractérisé en ce que le siège de soupape (27), la surface de butée (43) de celui-ci et l'extrémité libre de décharge du gicleur (12) sont agencés de manière que la surface de butée contre le siège de soupape coopère de façon étanche avec celui-ci, sensiblement au bord périphérique externe du siège de soupape et/ou la surface de butée, avec un dépassement maximal de 0,01 mm du siège de soupape ou de la surface de butée l'un par rapport à l'autre, en ce que le chanfrein (30) du gicleur (12) est formé sous un angle d'environ 15 à 20° par rapport à l'axe longitudinal du gicleur, et que la tête comporte une extrémité plane extérieure à peu près perpendiculaire à l'axe longitudinal où se termine le chanfrein (44).

2. Injecteur de carburant suivant la revendication 1, caractérisé en ce que le gicleur (12) a un diamètre externe étagé, l'extrémité libre de décharge ayant un diamètre réduit, et que la surface de butée (43) contre le siège de soupape a un angle différent d'environ 2° par rapport au siège de soupape (27).

EP 0 209 244 B1

Fig.1

Fig.2

Fig.3

Fig.4

Fig.5